(19)

Europäisches
Patentamt
European
Patent Office
Office européen
des brevets

(11) **EP 2 525 302 A1**

(12) **EUROPEAN PATENT APPLICATION**

(43) Date of publication:
**21.11.2012 Bulletin 2012/47**

(51) Int Cl.:
**G06K 9/00** (2006.01)   **H04N 5/235** (2006.01)

(21) Application number: **12168151.4**

(22) Date of filing: **16.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.05.2011 JP 2011111724**

(71) Applicant: **Koito Manufacturing Co., Ltd.
Tokyo 108-8711 (JP)**

(72) Inventor: **Kobayashi, Shoji
Shizuoka-shi, Shizuoka 424-8764 (JP)**

(74) Representative: **Grünecker, Kinkeldey,
Stockmair & Schwanhäusser
Leopoldstrasse 4
80802 München (DE)**

(54) **Image processing system**

(57)    An image processing system includes an attribute determination portion that acquires image information about a plurality of taken images obtained by taking the images of an area ahead of a vehicle under a plurality of exposure conditions, and that determines an attribute of an object that is present ahead of the vehicle as a light emitting body or a light reflecting body, based on the image information about the plurality of taken images. The system may further include an image taking portion that takes images of the area ahead of the vehicle. The image taking portion may take images ahead of the vehicle under a plurality of exposure conditions that differ in exposure amount during a predetermined period, and may output the image information about the plurality of taken images to the attribute determination portion.

FIG. 6

**Description**

BACKGROUND OF THE INVENTION

1. Field of the Invention

The present invention relates to an image processing system suitable for light distribution control of a vehicle.

2. Description of Related Art

In recent years, various devices have been proposed so as to realize appropriate light distribution control on the basis of information regarding an area ahead of a vehicle that is acquired by a camera, a sensor or the like that is mounted on the vehicle. For example, as a technology for further improving the visibility for a driver while reducing the risk of giving glare to a vehicle ahead, there is disclosed a vehicular headlamp apparatus that increases or decreases the illuminance of an additional light distribution pattern according to the distance from a host vehicle to the vehicle ahead, and the angle formed between the traveling direction of the host vehicle and the traveling direction of the vehicle ahead (see Japanese Patent Application Publication No. 2010-163141 (JP 2010-163141 A)).

In order to realize appropriate light distribution control as mentioned above, it is important to accurately detect the situation ahead of a vehicle.

SUMMARY OF THE INVENTION

The present invention has been made in view of the aforementioned circumstances, and an object of the present invention is to provide a technology for making it possible to determine objects present ahead of a host vehicle.

An image processing system of a first aspect of the present invention includes an attribute determination portion configured to acquire image information about a plurality of images obtained by taking the images of an area ahead of a vehicle under a plurality of exposure conditions, and to determine an attribute of an object that is present ahead of the vehicle as a light emitting body or a light reflecting body based on the image information about the plurality of taken images.

When images of an area ahead of the vehicle are taken under a certain exposure condition, how objects appear in the taken images differ depending on the brightness and color of each object. When images of an area ahead of the vehicle are taken under different exposure conditions, it is usually the case that even one and the same object appears differently in the taken images. According to this aspect, the attribute of an object is determined on the basis of the image information about a plurality of taken images obtained by taking the images under a plurality of exposure conditions, it is possible to accurately determine the attribute of the object.

It is preferable that the foregoing image processing system of the first aspect further include an image taking portion that is configured to take the images of the area ahead of the vehicle during a predetermined period under the plurality of exposure conditions that differ in exposure amount, and to output the image information about the plurality of taken images to the attribute determination portion, wherein the exposure amount is set separately for each attribute of the object in advance based on a luminance of the object when the object is present as a light emitting body or a light reflecting body ahead of the vehicle. This further improves the accuracy in determination of the attributes of objects.

It is preferable that the foregoing image processing system of the first aspect further include an illuminance calculation portion that is configured to calculate glare illuminance of light emitted by the object toward a host vehicle, based on the image information and the exposure conditions. Due to this, it is possible to more accurately calculate the glare illuminance.

It is preferable that the foregoing image processing system of the first aspect further include an optical flow calculation portion that is configured to calculate an optical flow of the object based on the image information about the plurality of taken images that are taken at different timings, wherein the attribute determination portion is configured to determine the attribute of the object based on the optical flow. Due to this, the accuracy in determination of the attributes of objects over an increased range of variety of attributes, including whether an object is a moving body or a fixed body, and when it is a moving body, whether it is a preceding vehicle or an oncoming vehicle, etc., improves.

In the foregoing image processing system of the first aspect, it is preferable that the image taking portion be configured to output a first taken image as the image information of an R signal and to output a second taken image taken at a timing different from the timing of taking the first taken image as the image information of a B signal, and the attribute determination portion be configured to determine whether the object is a preceding vehicle based on the image information of the R signal and the image information of the B signal. This makes it possible to more accurately perform the discrimination between, for example, a tail lamp and other shining objects.

An image processing method of a second aspect of the present invention includes: taking images of an are ahead of a vehicle under a plurality of exposure conditions; and determining an attribute of an object that is present ahead of the vehicle as a light emitting body or a light reflecting body based on image information about a plurality of taken images obtained by taking the images of the area ahead of the vehicle.

In the foregoing image processing method of the second aspect, it is preferable that when the images are taken, the images of the area ahead of the vehicle be taken during a predetermined period under the plurality of exposure conditions that differ in exposure amount, and the exposure amount be set separately for each attribute of the object based on a luminance of the object when the object is present as a light emitting body or a light reflecting body ahead of the vehicle.

It is preferable that the foregoing image processing method of the second aspect further include calculating glare illuminance of light emitted by the object toward a host vehicle based on the image information and the exposure conditions.

It is preferable that the foregoing image processing system of the second aspect further include calculating an optical flow of the object based on the image information about the plurality of taken images that are taken at different timings, and when the attribute is to be determined, the attribute of the object be determined based on the optical flow.

It is preferable that the image processing method of the second aspect further include: setting a first taken image as the image information of an R signal; setting a second taken image taken at a timing different from the timing of taking the first taken image as the image information of a B signal; and determining whether the object is a preceding vehicle based on the image information of the R signal and the image information of the B signal.

According to the present invention, it is possible to accurately discriminate among objects present ahead of the host vehicle.

BRIEF DESCRIPTION OF THE DRAWINGS

Features, advantages, and technical and industrial significance of exemplary embodiments of the present invention will be described below with reference to the accompanying drawings, in which like numerals denote like elements, and wherein:

FIG. 1 is a diagram showing an example of a graph that shows a relation between the luminance (logarithm) of an image subject and the image density D that is a video output of a camera;

FIG. 2 is a diagram schematically showing a relation between a vanishing point of a straight road stretch of an express highway and an optical flow;

FIG. 3 is a schematic diagram showing a vehicle to which a vehicular headlamp apparatus in accordance with an embodiment of the present invention is applied;

FIG. 4 is a block diagram showing a general construction of the vehicular headlamp apparatus in accordance with the embodiment;

FIG. 5 is a flowchart showing a light distribution method that includes an object's attribute determination process in accordance with the embodiment; and

FIG. 6 is a schematic diagram for describing exposure conditions of a plurality of taken images for use for the object's attribute determination process.

DETAILED DESCRIPTION OF EMBODIMENTS

Various inventions and devices have been made regarding the controlling of the light distribution of a headlamp unit (headlight) of a vehicle or the like according to the environment in which the vehicle or the like is traveling, the road surface conditions, vehicles, and the like around. However, there can be various objects that are present ahead of a vehicle, including objects, such as oncoming vehicles or preceding vehicles, that require a light distribution control that factors in glare, and objects, such as roadway lightings and delineators (sight line guiding markers), that merely require that an optimal light distribution control for the host vehicle be performed without factoring in glare. The present inventors have come to conceive the present invention of this application so as to realize, in a simple construction, an appropriate light distribution control that is predicted according to attributes of an object present ahead of a vehicle.

In order to realize such a light distribution control of a headlamp unit as described above, it is preferable to use a sensor that detects light emitting bodies, such as a vehicle ahead (an oncoming vehicle or a preceding vehicle) that travels ahead of the host vehicle, roadway lightings, light reflecting bodies such as delineators, etc. Moreover, it is more preferable to have a function of specifically determining the attribute of a light emitting body or a light reflecting body that is detected as an object. It is to be noted herein that the attribute is a feature for determining whether a light emitting body or a light reflecting body ahead of the host vehicle is a vehicle ahead, a road attachment facility, etc. In more detail, the attribute is a feature for determining whether a light emitting body, if it is a vehicle, is a preceding vehicle or an oncoming vehicle, and, whether a light emitting body or a light reflecting body, if it is a road attachment facility or the like, is a road lighting or a delineator, or another light emitting facility (e.g., a road lighting, a shop lighting, advertisement, etc.), or a traffic signal.

In the embodiments described below, determination of the object's attributes mentioned above is realized by an apparatus with a simple construction and, specifically, by an image sensor equipped with a monocular camera. In addition to this simple apparatus construction, a technique as mentioned below (that will be detailed later) is adopted to improve the accuracy in determining the attribute of an object. Specifically, there are included (a) determination of the attribute of a light emitting body or a light reflecting body based on image information regarding a plurality of taken images that are taken ahead of the vehicle under a plurality of exposure conditions, (b) improvement of the accuracy in determination of the attribute of a moving object through utilization of an optical flow, (c) determination of the attribute of an on-road object (fixed object) through utilization of road section setting and a row of light spots, and (d) improvement of the accuracy in the attribute determination regarding an on-road object through utilization of the vanishing point of the road.

In addition to the attributes of a light emitting body and a light reflecting body (hereinafter, referred to as "light emitting body or the like" as appropriate), by calculating and utilizing an approximate distance from the host vehicle to a light emitting body or the like and information regarding the luminance (brightness) of the light emitting body or the like, it is also possible to further improve the accuracy in determination of the attribute of an object. In this case, a laser radar or a millimeter wave radar may be used for measurement of the distance between the host vehicle and a light emitting body or the like. Besides, an illuminometer may be used for measurement of luminance.

(UTILIZATION OF IMAGE INFORMATION ABOUT A PLURALITY OF IMAGES TAKEN UNDER A PLURALITY OF EXPOSURE CONDITIONS)

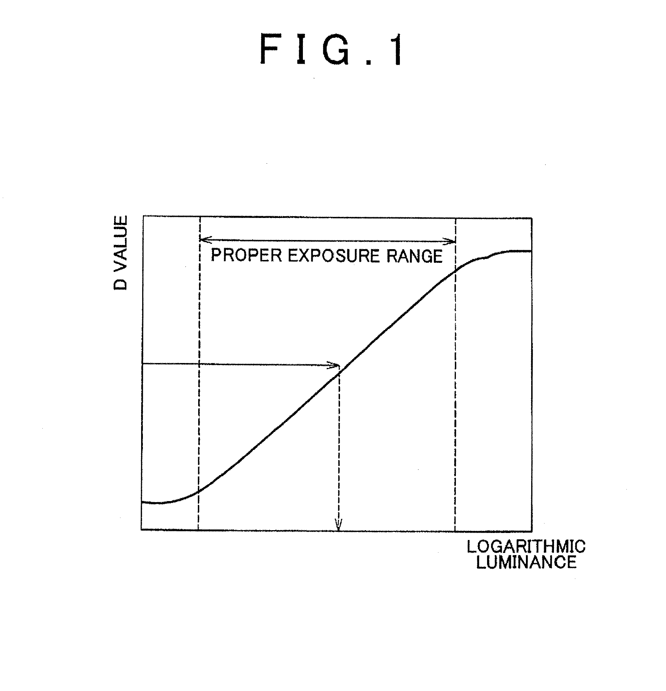

If the luminance distribution on an image subject is within a proper exposure range, an image with a distinct distribution of brightness is obtained. On the other hand, if the luminance distribution on the image subject is outside the proper exposure range (excessively light or excessively dark), the image becomes unclear. FIG. 1 is diagram showing an example of a graph that shows a relation between the luminance (logarithm) of an image subject and the image density D that is video output of a camera.

The image subject luminance at a predetermined position in a picture screen is found on the basis of the density-luminance characteristic of a light receiving element under the exposure condition (the area A of the aperture and the exposure time T). On the other hand, in the case where the exposure condition $A \times T$ = constant, image subjects of the same luminance have the same image density. Therefore, the following expression (1) holds, where K is a proportion constant.

$$D \approx K/(A \cdot T) \qquad ...(1)$$

Then, if the relation between the luminance B and the density D under a predetermined exposure condition $(A \cdot T)$ (gamma characteristic) is known, the image subject luminance B* at the density D* under a different exposure condition can be calculated by correcting the image subject luminance from the gamma characteristic and then calculating the factor for the luminance under the exposure condition with the use of the expression (1). Therefore, it is desirable that the exposure condition for the image subject that is used as an object of luminance measurement be positioned at the center in the gamma characteristic.

The luminance of an object present ahead of a vehicle as a light emitting body or the like can be approximately estimated by the attribute of the object, which will be described in detail below. Therefore, if images of the object are taken under a plurality of exposure conditions commensurate with the luminance, taking into account the luminance estimated for each of the attributes of objects, it becomes easier to discriminate a light emitting body or the like suitable for each exposure condition from other light emitting bodies or the like. For example, in the case where a light emitting body is an oncoming vehicle traveling with the high beam, if the amount of exposure as an exposure condition is made small, the headlamps projecting high beam light appear in taken images but light emitting bodies or light reflecting bodies that are relatively low in luminance, such as a road surface, tail lamps, etc., do not easily come out in the taken images. Therefore, by analyzing the image information of taken images taken under an exposure condition of small exposure amount, it becomes easy to identify the headlamp that projects high beam light, which serves as an object's attribute. Likewise, by analyzing the image information of taken images taken under different exposure conditions, it becomes possible to determine attributes of various objects.

(UTILIZATION OF OPTICAL FLOW)

In the case where the relative positional relation between the image sensor (camera) and an on-road object changes, the image of the object flows in continuously taken images. This phenomenon is termed optical flow (hereinafter, referred to as "OF" as appropriate). The smaller the relative distance between the host vehicle and the object is and the higher the relative speed therebetween is, the greater the OF is. For example, when the host vehicle is in a stopped state, an OFs that depend on respective moving objects occur. Besides, while the host vehicle is traveling, OFs that depend on respective on-road fixed objects, such as roadway lightings, delineators, etc., occur, and OFs that depend on respective vehicles ahead that are different in speed from the host vehicle, occur. Therefore, on the basis of the magnitude of OF, it is possible to determine whether the attribute of an object ahead of the host vehicle is a moving object or a fixing object relative to the road.

(UTILIZATION OF ROAD VANISHING POINT)

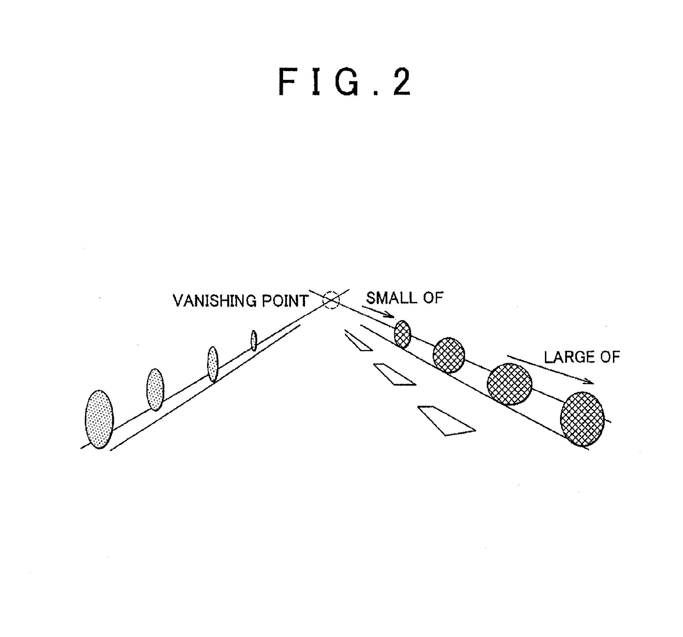

FIG. 2 is a diagram schematically showing a relation between a vanishing point of a straight road stretch of an express highway and the optical flow. As shown in FIG. 2, there exists a vanishing point of a straight road. Herein, the vanishing point can be defined as a point of convergence in a perspective drawing. The vanishing point is a point of infinity of lane markers, roadside strips, a central divider, road attachment facilities that are regularly arranged (roadway lightings and delineators), etc. Incidentally, in the case where a point of infinity cannot be found due to the road shape (e.g., a curved shape), the presence of a vehicle ahead, etc., it is possible to obtain a tentative vanishing point by extending an arrangement or layout of aforementioned objects in a short-range view to the infinite and estimating a point of intersection of such extensions in a picture frame. Incidentally, the vanishing point of curved roads (including not only horizontal curves but also vertical curves (up and down)) is difficult to calculate. However, a vanishing point of a road bent in the left-right direction can be calculated. Besides, in the case where the host vehicle moves in the direction of width of the road due to a lane change or the like, the vanishing point accordingly moves.

(SETTING OF ROAD SECTIONS AND UTILIZATION OF ROW OF INTERSECTION POINTS)

By analyzing data about the images of lane markers, roadside strips, a central divider, etc. ahead of the vehicle, it is possible to determine a road section such as the lane in which the host vehicle is traveling, the traveling lane of an oncoming vehicle, etc. Since the road attachment facilities, such as roadway lightings, delineators, etc., are regularly disposed on or along a road, the determination of a road section makes it possible to more accurately determine what object a light emitting body or the like is, in the night time. Specifically, in the night time, by taking into account what position relative to a road section (e.g., in the traveling lane of the host vehicle, the traveling lane of an oncoming vehicle, or the road shoulder) the shining spot or the row of light spots of a light emitting body or the like are present and how the aforementioned OF is, it is possible to determine whether the attribute of the light emitting body or the like is roadway lightings, delineators, a preceding vehicle, or an oncoming vehicle.

Hereinafter, an example embodiment of the present invention will be described with reference to the drawings. Incidentally, in the descriptions of the drawings, like elements are denoted by like reference characters, and redundant descriptions will be omitted as appropriate.

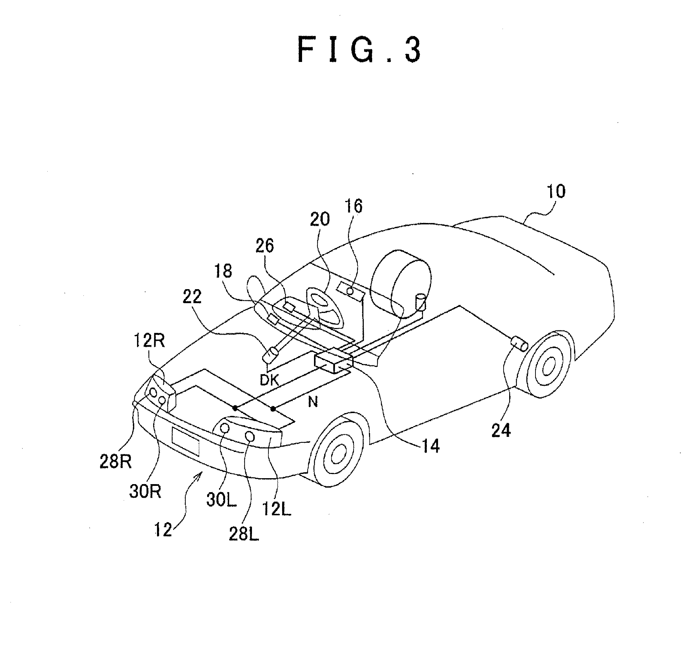

FIG. 3 is a schematic diagram showing a vehicle to which a vehicular headlamp apparatus in accordance with the embodiment of the present invention is applied. As shown in FIG. 3, a vehicle 10 in accordance with the embodiment includes: a headlamp apparatus 12; a control system 14 as a headlamp control apparatus that controls the radiation of light from the headlamp apparatus 12; various sensors that detect information that indicates the traveling situation of the vehicle 10 and that output detection signals to the control system 14; a front monitoring camera 16 that monitors an area ahead of the vehicle; and an antenna 18 that receives orbit signals from global positioning system (GPS) satellites, signals involved in the vehicle-to-vehicle communication, etc., and that outputs the signals to the control system 14.

The various sensors include, for example, a steering sensor 22 that detects the steering angle of a steering wheel 20, a vehicle speed sensor 24 that detects the vehicle speed of the vehicle 10, and an illuminance sensor 26 that detects the illuminance around the host vehicle. These sensors 22, 24 and 26 are connected to the aforementioned control system 14.

The headlamp apparatus applicable in the present invention is not particularly limited as long as the headlamp apparatus is configured to be able to change the distribution of the radiated light, according to the attribute of an object present ahead of the vehicle. For example, headlamps that use halogen lamps, gas discharge lamps, or LEDs can be adopted. Although this embodiment will be described in conjunction with a multi-lamp system (constructed of a plurality of LEDs or the like) capable of changing the light distribution in the high-beam region, it is also possible to use a system that is able to swivel lamps.

The headlamp apparatus 12 has a pair of right and left headlamp units 12R and 12L. The headlamp units 12R and 12L have the same construction, except that their internal structures are bilaterally symmetric. In a right-side lamp housing, there are disposed a low-beam lamp unit 28R and a high-beam lamp unit 30R. In a left-side lamp housing, there are disposed a low-beam lamp unit 28L and a high-beam lamp unit 30L.

The control system 14 controls the headlamp units 12R and 12L that are mounted in right and left portions of a front portion of the vehicle and that are capable of changing the light distributions in the high-beam regions, that is, the control system 14 controls the headlamp apparatus 12 capable of controlling the turning on and off of each of a plurality of LEDs so as to change the light distribution characteristics of the headlamp units 12R and 12L, on the basis of the outputs of the various sensors that are input to the control system 14. According to this type of adaptive driving beam (ADB), it is possible to improve the front visibility in accordance with the attributes of objects (preceding vehicles, oncoming vehicles, roadway lightings, etc.) present ahead of the vehicle, without giving glare to a vehicle ahead. Thus, this ADB is effective in increasing the traveling safety.

(VEHICULAR HEADLAMP APPARATUS)

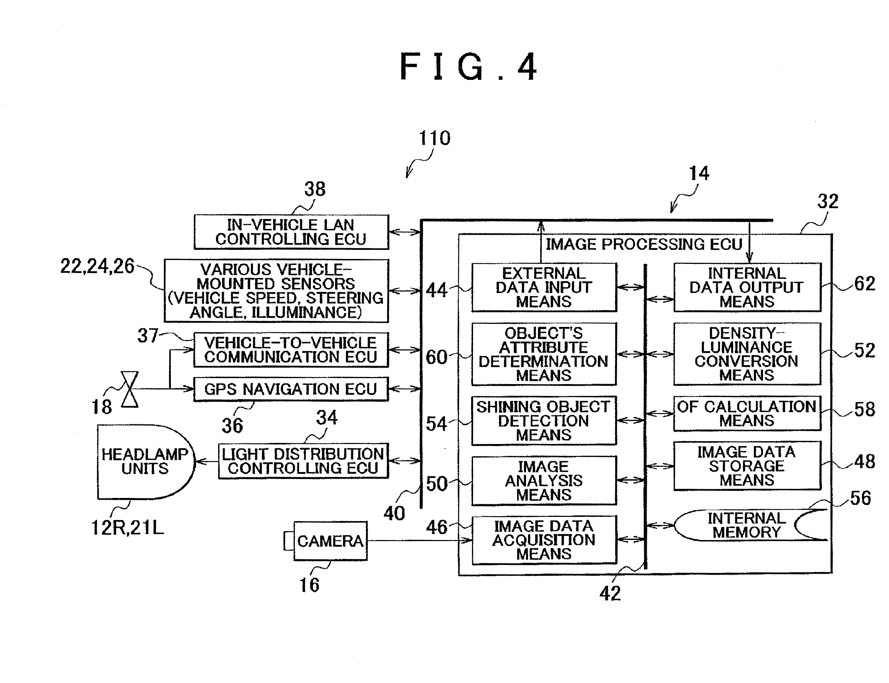

Next, a vehicular headlamp apparatus in accordance with the embodiment will be described. FIG. 4 is a block diagram showing a general construction of a vehicular headlamp apparatus 110 in accordance with the embodiment. The vehicular headlamp apparatus 110 includes the headlamp units 12R and 12L, and the control system 14 that controls the radiation of light from the headlamp units 12R and 12L. In the vehicular headlamp apparatus 110, the control system 14 determines the attributes of objects present ahead of the vehicle, determines light distribution control parameters on the basis of the attributes of the objects, and controls the radiation of light from the headlamp units 12R and 12L on the basis of the determined light distribution control parameters.

The front monitoring camera 16 for acquiring taken images of an area ahead of the vehicle that include a visual target of the driver is connected to the control system 14 in accordance with the embodiment. Besides, the steering sensor 22 and the vehicle speed sensor 24 that are provided for detecting steering information or the vehicle speed, and the illuminance sensor 26, to be referred to when the traveling state of the vehicle is to be determined, are also connected to the control system 14. The illuminance sensor 26 used herein may be, for example, a sensor in which a light receiving surface is disposed vertically so that the illuminance on a vertical surface (the glare amount caused by an artificial light source) of light received from an oncoming vehicle or an artificial light source (roadway lightings or shop lightings) can be measured, or a sensor in which a light receiving surface is disposed horizontally so that the horizontal surface luminance of light received from a traveling environment or from above the vehicle can be measured.

(CONTROL SYSTEM)

As shown in FIG. 4, the control system 14 includes an image processing electronic control unit (ECU) 32, a light distribution controlling ECU 34, a GPS navigation ECU 36, a vehicle-to-vehicle communication ECU 37, and an in-vehicle local area network (LAN) controlling ECU 38. The various ECUs and the various vehicle-mounted sensors are connected by an in-vehicle LAN bus 40, so that data can be sent and received therebetween. The image processing ECU 32 as an image processing system determines the attributes of objects present ahead of the vehicle on the basis of the various vehicle-mounted sensors and the image information (image data) about a plurality of taken images of an area ahead of the vehicle that are taken by the front monitoring camera 16 under a plurality of exposure conditions. Incidentally, inside the image processing ECU 32, various portions are interconnected by a high-speed bus 42. The light distribution controlling ECU 34 determines light distribution control parameters suitable for the traveling environment, in which the vehicle is, on the basis of the information from the image processing ECU 32 and the various vehicle-mounted sensors, and outputs control signals regarding the determined light distribution control parameters to the headlamp units 12R and 12L.

In the headlamp units 12R and 12L, the control signals from the light distribution controlling ECU 34 are input to driving devices for optical component parts and lighting control circuits of light sources, so that the light distribution is controlled. The front monitoring camera 16 is a monocular camera equipped with an image sensor such as a charge-coupled device (CCD), a complementary metal oxide semiconductor (CMOS), etc. From the image data obtained by the image sensor, the front monitoring camera 16 acquires road shape information needed for the driving of the vehicle, information regarding road attachment facilities, the situations of presence of oncoming vehicles or preceding vehicles, the positions thereof, etc. in cooperation with other radar sensors or the like, if necessary.

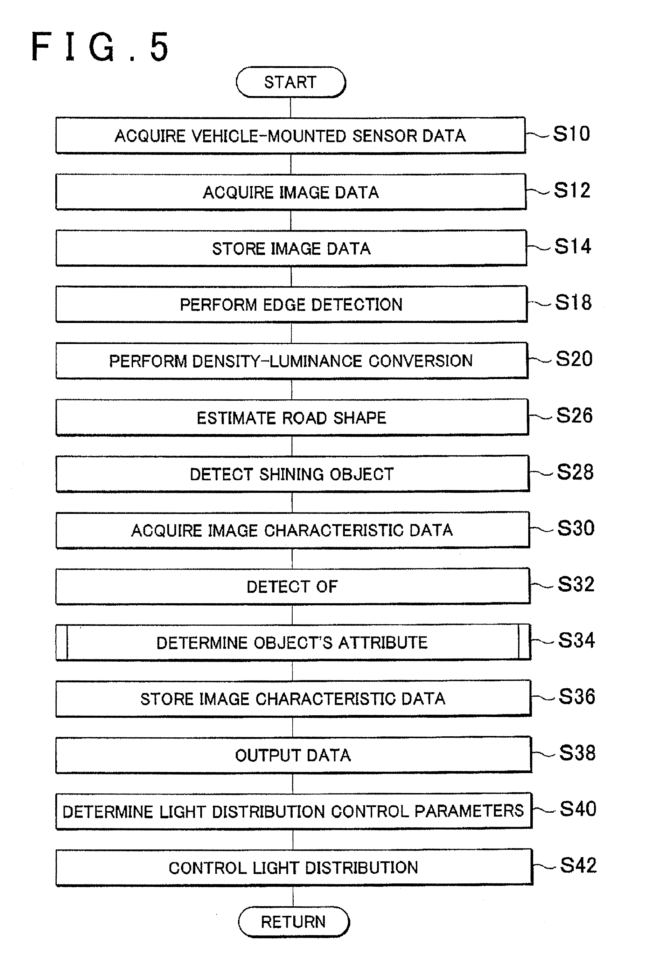

FIG. 5 is a flowchart showing a light distribution control method that includes an object's attribute determination process in accordance with the embodiment. The determination of the attribute of an object is executed mainly by the image processing ECU 32 shown in FIG. 4, and the light distribution control is executed mainly by the light distribution controlling ECU 34.

When the process starts at a predetermined timing, the data output by the various vehicle-mounted sensors (the steering sensor 22, the vehicle speed sensor 24, and the illuminance sensor 26), the GPS navigation ECU 36, the vehicle-to-vehicle communication ECU 37, etc. is acquired by an external data input means 44 via the in-vehicle LAN bus 40 (S10). Besides, the image data about a plurality of taken images that are taken by the front monitoring camera 16 under a plurality of exposure conditions are acquired by an image data acquisition means 46 (S12). Incidentally, the image data output by the front monitoring camera 16 may correspond to monochrome images or to color images.

The acquired data of each image is temporarily stored in a memory means, such as a random access memory (RAM) or the like, by an image data accumulation means 48 (S14). An image analysis means 50 performs edge detection in which difference calculation or differentiation and, furthermore, the Sobel operation on the density data contained in the image data is are performed, so as to extract the outline of an object (e.g., a light emitting body such as a headlight, a tail lamp, a roadway lighting, etc., or a light reflecting body such as a road surface, a lane marker, a delineator, etc.) that differs in density from the surroundings (S18). Incidentally, the method of the edge process is not limited to the foregoing method, but a known method may be appropriately modified for use in the this process.

Next, at a density luminance conversion means 52, the density data of images is converted into luminance (brightness) data (S20). The conversion of image data to luminance can be carried out by taking into account the exposure conditions if a relation between the luminance in a range ahead of the vehicle and the image density under an exposure condition (image taking condition) is determined beforehand (see FIG. 1).

Next, the position of a shining object, for example, a light emitting body or a light reflecting body, is detected separately for each of the image data sets of taken images taken under different exposure conditions. Specifically, a shining object detection means 54 extracts as a shining object an object that has a luminance (e.g., a luminance that corresponds to a road surface or a lane marker) higher than or equal to a predetermined luminance or a luminance within a predetermined range, on the basis of the density-luminance conversion in the process of S20, and detects the position of the extracted shining object (S28).

Next, the OF of the shining object is determined through analysis of the image data continuously acquired in time sequence as in motion pictures. Firstly, the previous data of image characteristics, such as the position of a shining object, a candidate for the object, etc., stored in an internal memory 56 in the previous image analysis process, and the present image characteristic data are acquired by an OF calculation means 58 (S30).

The OF calculation means 58 detects whether the OF has occurred regarding a shining object, on the basis of the image characteristic data of a plurality of taken images acquired at different times (S32). Specifically, the OF calculation means 58 calculates the OF of a shining object present as a light emitting body or a light reflecting body ahead of the vehicle, on the basis of the acquired luminance data of the taken images of an area ahead of the vehicle. Then, an object's attribute determination means 60 determines the attribute of the object present as a light emitting body or a light reflecting body ahead of the vehicle on the basis of the image data of the taken images shot under a plurality of exposure conditions and the OF calculated by the OF calculation means 58 (S34). Incidentally, the object's attribute determination method in step S34 will be described later.

After the attribute of an object is determined, the present image characteristic data is stored in the internal memory 56 (S36). Specifically, the data thus stored includes the OF vector, the attribute of the shining object, the position of the shining object, needed for OF detection, etc. This data is used for the calculation of the OF in the next image processing.

The attribute data about the objects determined by the object's attribute determination means 60, data regarding the road shape, etc., are output from an internal data output means 62 (S38). The output data is input to the light distribution controlling ECU 34 via the in-vehicle LAN bus 40, and light distribution control parameters are determined on the basis of the attributes of objects and the traveling state of the host vehicle that are contained in the data, the weather conditions, etc. (S40). Then, the light distribution controlling ECU 34 outputs control signals to the light sources and drive sources that are provided in the headlamp units 12R and 12L on the basis of the determined light distribution control parameters to control the light distribution (S42).

(OBJECT'S ATTRIBUTE DETERMINATION METHOD)

Next, step S34 in which the object's attribute determination process is performed will be described. Various objects exist ahead of a vehicle traveling on a road. The objects identified as shining objects by the front monitoring camera 16 of a vehicle traveling in the night time in the foregoing situation include the following objects.

First of all, examples of such objects include the headlights (HL) of oncoming vehicles and the taillights (TL) of preceding vehicles during the night-time driving. Such lights usually exist as pairs of right and left lights, and are positioned below the horizon. Besides, the magnitude of the OF of an object is small if the object is a preceding vehicle, and is large if the object is an oncoming vehicle.

Next, examples include roadway lightings and delineators. As for these fixed objects, installation standards are usually prescribed; for example, roadway lightings exist at least 5 meters above the road surface, that is, exist above the horizon. On the other hand, delineators are installed on the upper edge portion of a guardrail, and therefore exist below the horizon. Besides, if an object is a fixed object, the magnitude of the OF of the object is commensurate with the vehicle speed of the host vehicle and the distance between the object and the host vehicle.

Besides the foregoing objects, other objects, such as shop lightings, advertising neon signs, curve signs, etc., can be detected as shining objects. The shop lightings and the advertising neon signs are fixed objects that randomly exist, and do not have regularity in positional arrangement unlike roadway lightings and delineators. Therefore, performing image analysis with this respect taken into account makes it possible to discriminate a shop lighting or an advertising neon sign from the fixed objects such as a roadway lighting or the like. Besides, curve signs are installed at substantially the same height as delineators, and are difficult to discriminate from delineators. However, since mistaking a curve sign for a delineator does not affect the light distribution control, no special consideration regarding distinction between the curve signs and the delineators is not needed in the image analysis.

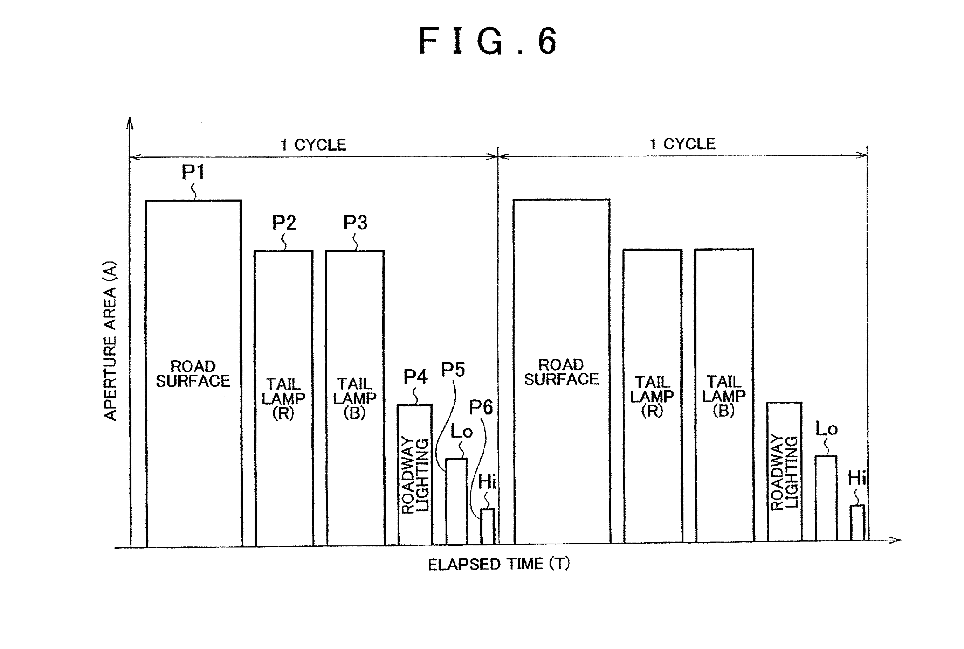

An object determination method in accordance with this embodiment is performed on the assumption that objects as mentioned above exist. FIG 6 is a schematic diagram for describing exposure conditions for a plurality of taken images that are used in the object's attribute determination process. In FIG. 6, the horizontal axis shows the elapsed time, T, and the vertical axis shows the aperture area, A. Incidentally, it cannot be said that the ratios of rectangular blocks corresponding to taken images along the horizontal axis and the vertical axis accurately represent the actual conditions. The ratios are set in such a manner as to allow qualitative description.

If an image of an area ahead of the vehicle is taken under a certain exposure condition, objects in the taken image appear differently depending on the brightness and color of each object. Furthermore, if images of an area ahead of the vehicle are taken under different exposure conditions, it is usually the case that even one and the same object appears differently in the taken images.

In this embodiment, a color camera is used as the front monitoring camera 16. The front monitoring camera 16 takes images of an area ahead of the vehicle for a predetermined period under a plurality of conditions with different exposure amounts, and outputs image information about a plurality of taken images to the object's attribute determination means 60. It is to be noted that the exposure amount is set separately for each of the attributes of objects on the basis of the luminance of each object that is assumed in the case where the object exists as a light emitting body or a light reflecting body ahead of the vehicle. Due to this, the accuracy in determination of the attributes of objects further improves.

Hereinafter, an example in which six images of a forward sight are acquired during one predetermined cycle under five exposure conditions that are different in the exposure amount. This example attempts to accomplish measurement of the luminance of five visual targets. The average luminances of the five visual targets measured are as follows. For example, the average luminance of a road surface $\approx$ 1 cd/m$^2$, the average luminance of tail lamp $\approx$ 200 cd/m$^2$ the average luminance of roadway lighting $\approx$ 2000 cd/m$^2$, the average luminance of low beam $\approx$ 70000 cd/m$^2$, and the average luminance of high beam $\approx$ 7000000 ed/m$^2$.

The exposure conditions (aperture area A and exposure time T) in one cycle are set so as to satisfy the following expression (2).

$$\text{Measurement-object luminance} \times (A \times T) \approx \text{constant} \dots (2)$$

That is, the exposure conditions are set so that the product of the estimated luminance of each visual target and the exposure amount ($\approx A \times T$, which corresponds to the area of each block shown in FIG. 6) is constant. Thus, in taken images, a visual target (object) within a proper exposure range is detected as a clear light spot. Therefore, the object's attribute determination means 60 determines the attribute of an object on the basis of the image data about a plurality of taken images taken under a plurality of exposure conditions that are different in exposure amount.

For example, in an image P1 taken with an exposure amount commensurate with the luminance of the road surface, the road surface appears (or comes out) clearly while light emitting objects, including tail lamps, roadway lightings, headlamps, etc. do not clearly appear (or come out) due to over-exposure. Besides, in images P2 and P3 taken with an exposure amount commensurate with the luminance of the tail lamps, the tail lamps appear clearly while the road surface does not appear due to under-exposure and the road lightings and the headlamps do not clearly appear due to over-exposure. In an image P4 taken with an exposure amount commensurate with the luminance of the roadway lightings, the roadway lightings appear clearly while the road surface and the tail lamps do not appear due to under-exposure and the headlamps do not clearly appear due to over-exposure. In an image P5 taken with an exposure amount commensurate with the luminance of the headlamps in the low-beam state, the headlamps in the low-beam state appear clearly while the road surface, the tail lamps, the roadway lightings do not appear due to under-exposure and the headlamps in the high-beam state do not clearly appear due to over-exposure. In an image P6 taken with an exposure amount commensurate with the luminance of the headlamp in the high-beam state, the headlamps in the high-beam state appear clearly while the road surface, the tail lamps, the roadway lightings, and the headlamps in the low-beam state do not appear due to under-exposure. Thus, the image processing ECU 32 is able to accurately determine the attributes of objects by processing the image data about taken images that are taken under a plurality of exposure conditions.

Incidentally, the image processing ECU 32 in accordance with this embodiment further includes the OF calculation means 58 for calculating the optical flow of an object on the basis of the image information about a plurality of taken images taken at different timings. The OF calculation means 58 determines the attribute of an object on the basis of the optical flows. Then, by additionally factoring in results of determination of the attribute of an object based on the optical flow in the determination of the attribute of the object described above, the accuracy in determination of the attributes of objects over an increased range of variety of attributes, including whether an object is a moving body or a fixed body, and if it is a moving body, whether it is a preceding vehicle or an oncoming vehicle, etc., improves.

Besides, the image processing ECU 32 may further include an illuminance calculation portion that calculates the glare illuminance of the light emitted from an object toward the host vehicle, on the basis of the image information and the exposure condition. This allows the glare illuminance to be more accurately calculated. The glare illuminance of a shining object is calculated from an estimated area of the shining object and the luminance thereof that is calculated backward from the exposure condition and the image density in the image data. If the calculated glare illuminance exceeds a permissible glare illuminance, the image processing ECU 32 sends a control signal to the light distribution controlling ECU 34 in order to control the headlamp apparatus 12 so that surroundings of the shining object concerned is illuminated brighter than usual. This reduces the glare that the driver receives from the shining object. Incidentally, the illumination calculation portion may calculate the glare illuminance on the basis of the headlamp information regarding an oncoming vehicle that is acquired by the vehicle-to-vehicle communication ECU 37. This more certainly reduces the glare that the driver receives from an oncoming vehicle that is a shining object.

Incidentally, in the above-described object determining process, the accuracy in discriminating among a preceding vehicle, a shop lighting, an advertising neon sign, a curve sign, etc., can be improved by additionally factoring in characteristic information regarding a present traveling road (regarding the road type, such as the express highway and the like, the number of lanes, whether the present road is in an urban district or a suburb, etc.) that is acquired from the GPS navigation ECU 36, and/or information regarding a vehicle ahead of the host vehicle (e.g., whether the headlamps are in the high-beam state or the low-beam state, the kind of lamps, the lamp area, the model of the vehicle, etc.) that is acquired from the vehicle-to-vehicle communication ECU 37.

Besides, the front monitoring camera 16 that is a color camera capable of determining the colors of shining objects facilitates the discrimination among preceding vehicles, oncoming vehicles, traffic signals, roadway lightings, shop lightings, etc. in an urban district with much noise light, by calculating the output ratio between an R (red) element and a B (blue) element that correspond to the position of the shining object in the sensor of the camera.

Besides, of the image data, comparison between the output ratio R/B(TL) between the R element and the B element in the sensor that correspond to the position of a taillight TL (of a preceding vehicle, and red light) and the output ratio R/B(HL) between the R element and the B element in the sensor that correspond to the position of a headlight HL (of an oncoming vehicle, and white light) shows a relation of R/B(TL)>>R/B(HL). Therefore, by finding the R/B ratios for light of various colors beforehand by experiments or simulations, it is possible to improve the accuracy in the discrimination between a preceding vehicle and an oncoming vehicle. In particular, this contributes to improvement in the accuracy in the discrimination at a curved road where a preceding vehicle and an oncoming vehicle are likely to cross each other in position.

Specifically, the front monitoring camera 16 outputs a first taken image (the image P2 shown in FIG. 6) as image information of an R signal, and outputs a second taken image (the image P3 shown in FIG. 6) taken at a timing different from the timing of taking the first taken image as image information of a B signal. The object's attribute determination means 60 determines whether an object is a preceding vehicle on the basis of the image information of the R signal and the image information of the B signal. This makes it possible to more accurately perform the discrimination between, for example, a tail lamp and other shining objects. Besides, the front monitoring camera 16 continuously takes the first taken images (images P2) and the second taken images (images P3). Due to this, the positional deviation of the tail lamps of a preceding vehicle between the first and second taken images is restrained, so that the image processing ECU 32 can accurately determine the output ratio.

As described above, since the control system 14 in accordance with this embodiment is able to discriminate among objects on the basis of acquired taken images, it becomes possible to perform appropriate light distribution control commensurate with the attributes of objects in the nighttime driving without imposing any special operational load on the driver. On the basis of the data acquired from the image processing ECU 32, the light distribution controlling ECU 34 is able to perform a light distribution control of automatically switching the light distribution of the headlamp units to the high beam when it is determined that no shining object exists ahead of the vehicle, for example. Besides, the image processing ECU 32 becomes able to perform control of, for example, automatically changing the light distribution of the headlamp units to a light distribution that does not give glare to an oncoming vehicle or a preceding vehicle (to a light distribution in which the LEDs that light an area in which the oncoming vehicle or the preceding vehicle exists are turned off or dimmed) when it is determined that an oncoming vehicle or a preceding vehicle exists as a shining object.

Besides, when it is determined that there exist only roadway lightings and/or delineators, which could not be discriminated from oncoming vehicles or preceding vehicles with the use of conventional technology, the light distribution controlling ECU 34 maintains the high-beam state of the light distribution of the headlamp units, so that the illumination capability of the headlamp units can be more effectively utilized.

Besides, since the object's attribute determination means 60 is able to determine the attribute of an object by comparing the relative velocity V1 between the object and the host vehicle that is estimated from the OF of the object and the host vehicle velocity V2, the object's attribute determination means 60 is able to determine the attribute of the object more specifically. Therefore, more appropriate light distribution control becomes possible.

Specifically, by comparing the relative velocity V1 and the host vehicle velocity V2, it is determined whether the attribute of the object is a fixed object or a moving body relative to the road. Thus, for example, when the relative velocity V1 to an object is substantially equal to the host vehicle velocity V2, the object's attribute determination means 60 determines that the object is a fixed object such as a road lighting, a delineator, etc., and when the relative velocity V1 to an object is different from the host vehicle velocity V2, the object's attribute determination means 60 determines that the object is a moving body such as an oncoming vehicle, a preceding vehicle, etc.

Besides, the object's attribute determination means 60 is able to determine whether the attribute of an object is a road lighting or a delineator, on the basis of where the position and the OF of the object are present with respect to the vertical direction in taken images.

According to the control system 14 as a headlamp control apparatus and the vehicular headlamp apparatus 110 equipped with the control system 14 in accordance with the embodiment, it becomes possible to perform a minute light distribution control according to the traffic visual environments (an illumination situation and an oncoming vehicle situation) in the nighttime in particular, which can contribute to the prevention of traffic accidents. Besides, since the control system 14 in accordance with the embodiment is able to determine the attributes of shining objects by using a monocular camera instead of using a plurality of cameras or a camera of a complicated mechanism, it becomes possible to reduce the cost of the entire system.

Besides, the front monitoring camera 16 acquires images under substantially the same exposure condition within a predetermined time in the daytime. This is because, in the daytime, unlike the nighttime, there is no difference in visibility in taken images (how clearly objects appear (are recorded) in taken images) depending on differences in luminance between light emitting bodies and light reflecting bodies and therefore, the ease of image processing and/or control is taken into consideration.

While the present invention has been described with reference to the foregoing embodiments, the present invention is not limited to the foregoing embodiments, but also includes appropriate combinations of and replacements in constructions of the embodiments of the present invention. Besides, it is also possible to appropriately change the combinations and the sequence of processes in the foregoing embodiments and make modifications, such as various design changes, to the embodiments, on the basis of the knowledge of those having ordinary skill in the art. Embodiments with such modifications are also included within the scope of the present invention.

**Claims**

1. An image processing system **characterized by** comprising
   an attribute determination portion (60) configured to acquire image information about a plurality of images obtained by taking the images of an area ahead of a vehicle under a plurality of exposure conditions, and to determine an attribute of an object that is present ahead of the vehicle as a light emitting body or a light reflecting body, based on the image information about the plurality of taken images.

2. The image processing system according to claim 1, further comprising
   an image taking portion (16, 46) that is configured to take the images of the area ahead of the vehicle during a predetermined period under the plurality of exposure conditions that differ in exposure amount, and to output the image information about the plurality of taken images to the attribute determination portion (60), wherein
   the exposure amount is set separately for each attribute of the object in advance based on a luminance of the object when the object is present as a light emitting body or a light reflecting body ahead of the vehicle.

3. The image processing system according to claim 2, wherein:

   the image taking portion (16, 46) is configured to output a first taken image as the image information of an R signal and to output a second taken image taken at a timing different from the timing of taking the first taken image as the image information of a B signal; and
   the attribute determination portion (60) is configured to determine whether the object is a preceding vehicle based on the image information of the R signal and the image information of the B signal.

4. The image processing system according to any one of claims 1 to 3, further comprising
   an illuminance calculation portion that is configured to calculate glare illuminance of light emitted by the object toward a host vehicle, based on the image information and the exposure conditions.

5. The image processing system according to any one of claims 1 to 4, further comprising
an optical flow calculation portion (58) that is configured to calculate an optical flow of the object based on the image information about the plurality of taken images that are taken at different timings, wherein
the attribute determination portion (60) is configured to determine the attribute of the object based on the optical flow.

6. An image processing method **characterized by** comprising:

taking images of an area ahead of a vehicle under a plurality of exposure conditions; and
determining an attribute of an object that is present ahead of the vehicle as a light emitting body or a light reflecting body based on image information about a plurality of taken images obtained by taking the images of the area ahead of the vehicle.

7. The image processing method according to claim 6, wherein:

when the images are taken, the images of the area ahead of the vehicle are taken during a predetermined period under the plurality of exposure conditions that differ in exposure amount; and
the exposure amount is set separately for each attribute of the object in advance based on a luminance of the object when the object is present as a light emitting body or a light reflecting body ahead of the vehicle.

8. The image processing method according to claim 6 or 7, further comprising calculating glare illuminance of light emitted by the object toward a host vehicle based on the image information and the exposure conditions.

9. The image processing method according to any one of claims 6 to 8, further comprising
calculating an optical flow of the object based on the image information about the plurality of taken images that are taken at different timings, wherein
when the attribute is determined, the attribute of the object is determined based on the optical flow.

10. The image processing method according to claim any one of claims 6 to 9, further comprising:

setting a first taken image as the image information of an R signal;
setting a second taken image taken at a timing different from the timing of taking the first taken image as the image information of a B signal; and
determining whether the object is a preceding vehicle based on the image information of the R signal and the image information of the B signal.

# FIG.1

# FIG.2

VANISHING POINT

SMALL OF

LARGE OF

# F I G . 3

# F I G . 4

IN-VEHICLE LAN CONTROLLING ECU — 38

VARIOUS VEHICLE-MOUNTED SENSORS (VEHICLE SPEED, STEERING ANGLE, ILLUMINANCE) — 22,24,26

VEHICLE-TO-VEHICLE COMMUNICATION ECU — 37

GPS NAVIGATION ECU — 36

HEADLAMP UNITS — 12R,21L — 18

LIGHT DISTRIBUTION CONTROLLING ECU — 34

CAMERA — 16

110

14

IMAGE PROCESSING ECU — 32

EXTERNAL DATA INPUT MEANS — 44

OBJECT'S ATTRIBUTE DETERMINATION MEANS — 60

SHINING OBJECT DETECTION MEANS — 54

IMAGE ANALYSIS MEANS — 50

IMAGE DATA ACQUISITION MEANS — 46

INTERNAL DATA OUTPUT MEANS — 62

DENSITY-LUMINANCE CONVERSION MEANS — 52

OF CALCULATION MEANS — 58

IMAGE DATA STORAGE MEANS — 48

INTERNAL MEMORY — 56

40

42

# FIG.5

START

| | |
|---|---|
| ACQUIRE VEHICLE-MOUNTED SENSOR DATA | S10 |
| ACQUIRE IMAGE DATA | S12 |
| STORE IMAGE DATA | S14 |
| PERFORM EDGE DETECTION | S18 |
| PERFORM DENSITY-LUMINANCE CONVERSION | S20 |
| ESTIMATE ROAD SHAPE | S26 |
| DETECT SHINING OBJECT | S28 |
| ACQUIRE IMAGE CHARACTERISTIC DATA | S30 |
| DETECT OF | S32 |
| DETERMINE OBJECT'S ATTRIBUTE | S34 |
| STORE IMAGE CHARACTERISTIC DATA | S36 |
| OUTPUT DATA | S38 |
| DETERMINE LIGHT DISTRIBUTION CONTROL PARAMETERS | S40 |
| CONTROL LIGHT DISTRIBUTION | S42 |

RETURN

# FIG.6

Europäisches
Patentamt
European
Patent Office
Office européen
des brevets

**EUROPEAN SEARCH REPORT**

Application Number

EP 12 16 8151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 97/35743 A1 (DONNELLY CORP [US])<br>2 October 1997 (1997-10-02)<br>* page 4, line 11 - page 9, line 26 *<br>* page 13, line 21 - page 14, line 17 *<br>* page 16, lines 21-25 *<br>* figures 2,5,7 * | 1-3,5-7,<br>9,10<br>4,8 | INV.<br>G06K9/00<br>H04N5/235 |
| Y | John Bell ET AL: "Basic Photographic Sensitometry Workbook",<br>,<br>1 November 2006 (2006-11-01), pages 1-24,<br>XP55038809,<br>Rochester, NY, USA<br>Retrieved from the Internet:<br>URL:http://motion.kodak.com/motion/uploade<br>dFiles/US_plugins_acrobat_en_motion_educat<br>ion_sensitometry_workbook.pdf<br>[retrieved on 2012-09-20]<br>* the whole document * | 4,8 | |
| X | EP 1 513 103 A2 (HITACHI LTD [JP])<br>9 March 2005 (2005-03-09)<br>* paragraphs [0002] - [0004] *<br>* paragraphs [0012] - [0018] *<br>* paragraphs [0040] - [0054] *<br>* paragraphs [0065] - [0072] *<br>* figures 1-3,8-10 * | 1-3,6,7,<br>10 | TECHNICAL FIELDS SEARCHED (IPC)<br><br>G06K<br>B60Q<br>F21S<br>H04N |
| X,P | EP 2 437 233 A1 (HITACHI AUTOMOTIVE SYSTEMS LTD [JP])<br>4 April 2012 (2012-04-04)<br>* paragraphs [0027] - [0041] *<br>* figures 5-8 * | 1,2,6,7 | |
| A | WO 2010/050095 A1 (KOITO MFG CO LTD [JP]; KOBAYASHI SHOJI [JP])<br>6 May 2010 (2010-05-06)<br>* abstract * | 5,9 | |

-/--

The present search report has been drawn up for all claims

| Place of search | Date of completion of the search | Examiner |
|---|---|---|
| The Hague | 26 September 2012 | Hermes, Lothar |

Europäisches
Patentamt

European
Patent Office

Office européen
des brevets

## EUROPEAN SEARCH REPORT

Application Number

EP 12 16 8151

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & EP 2 347 931 A1 (KOITO MFG CO LTD [JP]) 27 July 2011 (2011-07-27) * the whole document * ----- | | |

TECHNICAL FIELDS
SEARCHED      (IPC)

The present search report has been drawn up for all claims

| Place of search | Date of completion of the search | Examiner |
|---|---|---|
| The Hague | 26 September 2012 | Hermes, Lothar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 16 8151

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2012

| Patent document cited in search report | | Publication date | Patent family member(s) | | Publication date |
|---|---|---|---|---|---|
| WO 9735743 | A1 | 02-10-1997 | AU | 2345197 A | 17-10-1997 |
| | | | EP | 0889801 A1 | 13-01-1999 |
| | | | US | 5796094 A | 18-08-1998 |
| | | | US | 6097023 A | 01-08-2000 |
| | | | US | 6320176 B1 | 20-11-2001 |
| | | | US | 2002040962 A1 | 11-04-2002 |
| | | | US | 2002047087 A1 | 25-04-2002 |
| | | | US | 2003205661 A1 | 06-11-2003 |
| | | | WO | 9735743 A1 | 02-10-1997 |
| EP 1513103 | A2 | 09-03-2005 | EP | 1513103 A2 | 09-03-2005 |
| | | | JP | 4253271 B2 | 08-04-2009 |
| | | | JP | 2005092857 A | 07-04-2005 |
| | | | US | 2005036660 A1 | 17-02-2005 |
| | | | US | 2008278577 A1 | 13-11-2008 |
| EP 2437233 | A1 | 04-04-2012 | EP | 2437233 A1 | 04-04-2012 |
| | | | JP | 2010272067 A | 02-12-2010 |
| | | | US | 2012062746 A1 | 15-03-2012 |
| | | | WO | 2010137563 A1 | 02-12-2010 |
| WO 2010050095 | A1 | 06-05-2010 | EP | 2347931 A1 | 27-07-2011 |
| | | | WO | 2010050095 A1 | 06-05-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010163141 A